# EUROPEAN PATENT APPLICATION

(11) **EP 4 718 778 A1**
(43) Date of publication of application: **01.04.2026**
(21) Application number: 25203568.8
(22) Date of filing: 22.09.2025
(51) Int. Cl.: H04L 9/40, H04W 4/24, H04W 8/12

(54) **AUTOMATIC SUBSCRIBER IDENTITY MODULE PROVISIONING**

(30) Priority: 27.09.2024 IN 202411073356
(71) Applicant: Nokia Solutions and Networks Oy, 02610 Espoo (FI)
(72) Inventor: SATHYANARAYANAMURTHY, Kiran, Tumakuru (IN); DHARMADHIKARI, Neeraj S, Bangalore (IN)
(74) Representative: Nokia EPO representatives

(57) **Abstract**

Techniques for facilitating automatic Subscriber Identity Module (SIM) provisioning are described. In operation, an Auto-Provisioning (AP) configuration request for the at least one secondary SIM corresponding to a primary SIM is received. The AP configuration request comprises a first pseudo-identifier associated with the primary SIM. The primary SIM is then authenticated. Upon authentication of the primary SIM, a first secure hash corresponding to the first pseudo-identifier is derived. Thereafter, at least one second pseudo-identifier associated with the at least one secondary SIM is received. Subsequently, at least one second secure hash for the secondary SIM is derived based on the second pseudo-identifier and the first secure hash. The first secure hash and the second secure hash are then stored in a first node and at least one second node of a distributed ledger, with the first node linked to the at least one second node.

## Description

### BACKGROUND

In the ever-evolving landscape of technology, Internet of Things (IoT) has emerged as a pivotal element in the creation of interconnected digital ecosystems. An loT setup includes a plurality of devices that communicate with each other through a network for enabling users to manage and monitor various aspects of different environments, such as homes, offices, factories, and cities. Each device from amongst the plurality of devices included in an loT setup uses a Subscriber Identity Module (SIM) that enables the devices to communicate with each other through the network.

### SUMMARY

According to a first aspect, there is described a method comprising: receiving an Auto-Provisioning (AP) configuration request for at least one secondary Subscriber Identity Module (SIM) corresponding to a primary SIM, the AP configuration request comprising a first pseudo-identifier associated with the primary SIM; querying a subscriber repository of a Radio Access Network (RAN) based on the first pseudo-identifier to authenticate the primary SIM; deriving a first secure hash corresponding to the first pseudo-identifier upon authentication of the primary SIM; receiving at least one second pseudo-identifier associated with the at least one secondary SIM; deriving at least one second secure hash for the at least one secondary SIM, the at least one second secure hash being derived based on the at least one second pseudo-identifier and the first secure hash; and storing the first secure hash on a first node and the at least one second secure hash on at least one second node of a distributed ledger, wherein the first node is linked to the at least one second node.

According to some examples, the method further comprises receiving a location of AP context data for the primary SIM on the subscriber repository, the AP context data being indicative of resources for provisioning configuration settings on the at least one secondary SIM.

According to some examples, the method further comprises: receiving an AP request to initiate provisioning of configuration settings on the at least one secondary SIM, the AP request comprising the first pseudo-identifier; querying the distributed ledger based on the first pseudo-identifier to identify the at least one secondary SIM linked to the primary SIM; retrieving the AP context data for the primary SIM based on the location of the AP context data on the subscriber repository; and initiating auto-provisioning for the at least one secondary SIM based on the AP context data.

According to some examples, prior to querying the distributed ledger based on the first pseudo-identifier, the method comprises authenticating the primary SIM with a network operator corresponding to the primary SIM, the authenticating being based on the first pseudo-identifier.

According to some examples, the first pseudo-identifier and the at least one second pseudo-identifier is pseudo-International Mobile Subscriber Identity (IMSI) code.

According to some examples, the authenticating comprises identifying a subscriber profile for the primary SIM based on the first pseudo-identifier, the subscriber profile being identified from amongst a plurality of subscriber profiles stored in the subscriber repository.

According to a second aspect, there is described a network element comprising: at least one processor and at least one memory storing instructions that, when executed by the at least one processor, cause the network element at least to: receive an Auto-Provisioning (AP) configuration request for at least one secondary Subscriber Identity Module (SIM) corresponding to a primary SIM, the AP configuration request comprising a first pseudo-identifier associated with the primary SIM; query a subscriber repository of a Radio Access Network (RAN) based on the first pseudo-identifier to authenticate the primary SIM; derive a first secure hash corresponding to the first pseudo-identifier upon authentication of the primary SIM; receive at least one second pseudo-identifier associated with the at least one secondary SIM; derive at least one second secure hash for the at least one secondary SIM, the at least one second secure hash being derived based on the at least one second pseudo-identifier and the first secure hash; and store the first secure hash on a first node and the at least one second secure hash on at least one second node of a distributed ledger, wherein the first node is linked to the at least one second node.

According to some examples, the at least one processor further causes the network element to receive a location of AP context data for the primary SIM on the subscriber repository, the AP context data being indicative of resources for provisioning configuration settings on the at least one secondary SIM.

According to some examples, the at least one processor causes the network element to: receive an AP request to initiate provisioning of configuration settings on the at least one secondary SIM, the AP request comprising the first pseudo-identifier; query the distributed ledger based on the first pseudo-identifier to identify the at least one secondary SIM linked to the primary SIM; retrieve the AP context data for the primary SIM based on the location of the AP context data on the subscriber repository; and initiate AP for the at least one secondary SIM based on the AP context data.

According to some examples, prior to querying the distributed ledger based on the first pseudo-identifier, the at least one processor causes the network element to authenticate the primary SIM with a network operator corresponding to the primary SIM, the authenticating being based on the first pseudo-identifier.

According to some examples, the first pseudo-identifier and the second pseudo-identifier is pseudo-International Mobile Subscriber Identity (IMSI) code.

According to a third example, there is described a User Equipment (UE) comprising: at least one processor and at least one memory storing instructions that, when executed by the at least one processor, cause the UE at least to: transmit, to a network element, an Auto-Provisioning (AP) configuration request for at least one secondary Subscriber Identity Module (SIM) corresponding to a primary SIM, the AP configuration request comprising a first pseudo-identifier associated with the primary SIM for querying a subscriber repository of a Radio Access Network (RAN) to authenticate the primary SIM and generating a first secure hash upon authentication; receive a request to transmit at least one second pseudo-identifier associated with at least one secondary SIM; transmit the at least one second pseudo-identifier to derive at least one second secure hash for the at least one secondary SIM, the at least one second secure hash being derived based on the at least one second pseudo-identifier and the first secure hash; and receive an AP configuration response indicative of successful linkage of the primary SIM and the at least one secondary SIM, the linkage being established by storing the first secure hash on a first node and the at least one second secure hash on at least one second node of a distributed ledger, wherein the first node is linked to the at least one second node.

According to some examples, prior to transmitting the AP configuration request, the at least one processor causes the UE to authenticate the primary SIM with an Authentication Proxy (AuP) Server of a network operator corresponding to the primary SIM based on the first pseudo-identifier.

According to some examples, the at least one processor causes the UE to: transmit an AP request to initiate provisioning of configuration settings on the at least one secondary SIM, the AP request comprising the first pseudo-identifier; and receive an AP response indicative of successful provisioning of the configuration settings on the at least one secondary SIM.

According to some examples, the first pseudo-identifier and the at least one second pseudo-identifier is pseudo-International Mobile Subscriber Identity (IMSI) code.

### BRIEF DESCRIPTION OF DRAWINGS

Fig. 1 illustrates a cellular network for facilitating automatic Subscriber Identity Module (SIM) provisioning, in accordance with an example of the present subject matter.
Fig. 2 illustrates schematics of a network element for facilitating automatic SIM provisioning, in accordance with an example of the present subject matter.
Fig. 3 illustrates a call flow for facilitating automatic SIM provisioning, in accordance with an example of the present subject matter.
Fig. 4 illustrates a method for facilitating automatic SIM provisioning, in accordance with an example of the present subject matter.
Fig. 5 illustrates the method for facilitating automatic SIM provisioning, in accordance with another example of the present subject matter.
Fig. 6 illustrates the method for facilitating automatic SIM provisioning, in accordance with yet another example of the present subject matter.
Fig. 7 illustrates a non-transitory computer-readable medium for facilitating automatic SIM provisioning, in accordance with an example of the present subject matter.

Throughout the drawings, identical reference numbers designate similar, but not necessarily identical, elements. The drawings provide examples and/or implementations consistent with the description; however, the description is not limited to the examples and/or implementations provided in the drawings.

### DETAILED DESCRIPTION

Before the SIM may be utilized for communication, the SIM requires activation by an associated network operator. The process of activation of the SIM is known as SIM provisioning and involves creation of a subscriber profile on a subscriber repository and updating the subscriber profile with configuration settings corresponding to services requested by the user. Traditionally, the creation of the subscriber profile, association of the SIM identifier, and the updating of the subscriber profile with configuration settings is performed manually using a Customer Relationship Management (CRM) system. If the services are to be modified, such modifications are also performed manually using the CRM system.

Moreover, in situations where a user acquires additional SIMs and require such SIMs to be provisioned with configuration settings similar to a previously owned SIM, each SIM has to be manually provisioned with similar configuration settings individually. Further, if the services are to be modified, such modifications are also performed manually for each SIM.

Owing to the manual efforts involved in the SIM provisioning, in setups where users have multiple SIMs either within one device, such as multi-SIM User Equipment (UE) or the users have multiple SIMs across multiple devices, such as an loT setup, SIM provisioning is complex. The complexity involved in SIM provisioning is further compounded in situations where the services requested by the user are to be modified for multiple additional SIMs corresponding to the previously owned SIM.

According to examples of the present subject matter, techniques for facilitating automatic Subscriber Identity Module (SIM) provisioning are described.

In an example, the techniques involve establishing a linkage between a primary SIM and at least one secondary SIM corresponding to the primary SIM and utilizing the established linkage to provision the at least secondary SIM with configuration settings associated with the primary SIM.

In operation, an Auto-Provisioning (AP) configuration request for the at least one secondary SIM corresponding to the primary SIM may be received, where the AP configuration request comprises a first pseudo-identifier associated with the primary SIM. The primary SIM may then be authenticated by querying a subscriber repository of a Radio Access Network (RAN) based on the first pseudo-identifier. In response to authentication of the primary SIM, a first secure hash corresponding to the first pseudo-identifier may be derived. Thereafter, at least one second pseudo-identifier associated with the at least one secondary SIM may be received. Subsequently, at least one second secure hash for the secondary SIM may be derived, where the second secure hash may be derived based on the second pseudo-identifier and the first secure hash. The first secure hash and the second secure hash may then be stored in a first node and at least one second node of a distributed ledger, with the first node being linked to the at least one second node.

By establishing a linkage between the plurality of SIMs and utilizing the established linkage to simultaneously provision the plurality of SIMs with similar configuration settings, the present subject matter facilitates reduction in operational complexity involved in SIM provisioning for the plurality of SIMs.

In an example, once the linkage between the plurality of SIMs is established, an AP request to initiate provisioning of configuration settings on the at least one secondary SIM may be received. In the example, prior to receiving the AP request, the primary SIM may be authenticated with a network operator associated with the primary SIM based on the first pseudo-identifier. Once the primary SIM is authenticated, authentication for at least one secondary SIM may be performed based on smart contracts corresponding to the distributed ledger instead of individual authentication of each of the at least one secondary SIM with the core network. As a result, in addition to reduction in operational complexity, the present subject matter also facilitates reduction in signaling overhead involved in SIM provisioning for the plurality of SIMs.

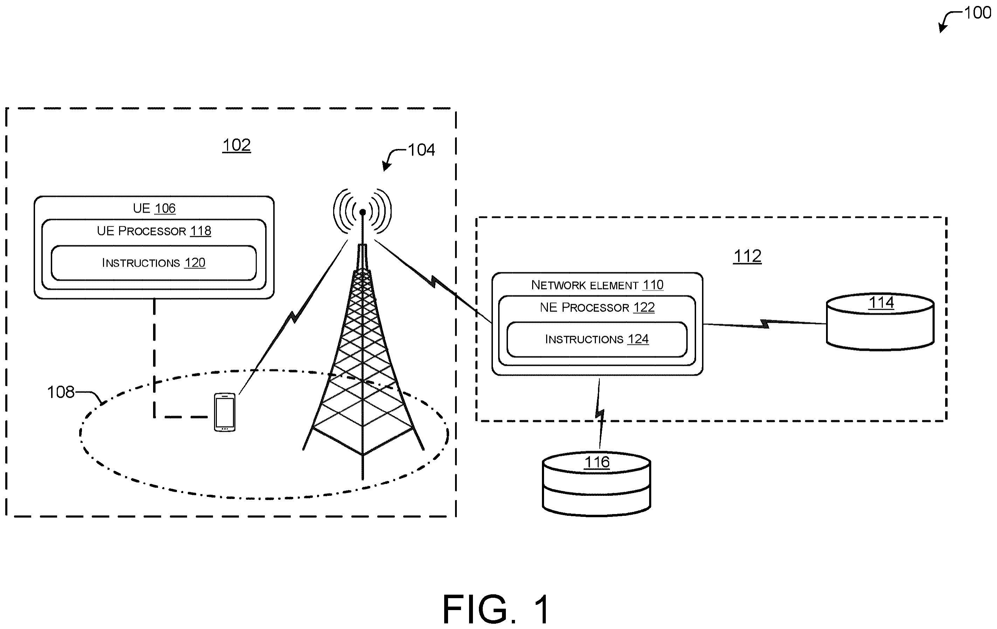

The manner in which the example network elements and the SON server are implemented is explained in detail with respect to Fig. 1 to Fig. 6. While aspects of the described above may be implemented in any number of different electronic devices, environments, and/or implementations, the examples are described in the context of the following example device(s). It is to be noted that drawings of the present subject matter shown here are for illustrative purposes and are not to be construed as limiting the scope of the subject matter claimed.

Fig. 1 illustrates a cellular network 100 for facilitating automatic Subscriber Identity Module (SIM) provisioning, in accordance with an example of the present subject matter. Examples of the cellular network 100 may include, but are not limited to, Long-Term Evolution (LTE), LTE-Advanced (LTE-A), or 5th Generation New Radio (5G-NR) networks. Further, examples of the SIM may include, but are not limited to, physical SIM card, Soft SIM, Embedded (eSIM), and integrated SIM (iSIM).

The cellular network 100 may include a Radio Access Network (RAN) 102. Examples of RAN 102 may vary based on a type of the cellular network 100. For instance, in LTE or LTE-Advanced (LTE-A) networks, the RAN 102 may be implemented as Evolved Universal Terrestrial Radio Access Network (E-UTRAN). On the other hand, in 5G-NR, the RAN 102 may be implemented as Next Generation RAN (NG-RAN).

The RAN 102 may include a network node 104 and a User Equipment (UE) 106 served by the network node 104. In an example, the network node 104 may have an associated range of communication 108 which is a geographical area covered by signals emitted by the network node 104. In the example, the UE 106 being served by the network node 104 may be located within the associated range of communication 108. Examples of the network node 104 may vary based on a type of the cellular network 100. For instance, in LTE networks, the network node 104 may be Evolved NodeB (eNB). On the other hand, in 5G-NR networks, the network node 104 may be Next Generation NodeB (gNB).

The cellular network 100 may further include a network element 110 coupled to the network node 104. In an example, the network element 110 may reside within a core network 112 of the cellular network 100. In the example, the core network 112 may include additional network elements (not shown) other than the network element 110. Examples of the core network 112 and the additional network elements may vary based on a type of the cellular network 100. For instance, when the cellular network 100 is LTE network, the core network 112 may be Evolved Packet Core (EPC) network and may include the additional network elements, such as Mobility Management Entity (MME), Serving Gateway (SGW), Packet Gateway (PGW), Policy and Charging Rules Function (PCRF), and HSS (Home Subscriber Server). On the other hand, when the cellular network 100 is 5G-NR, the core network 112 may be 5G Core and may include additional network elements, such as Access Mobility Function (AMF), Session Management Function (SMF), User Plane Function (UPF), Policy Control Function (PCF), Unified Data Management (UDM), Network Exposure Function (NEF), Network Repository Function (NRF), and Network Slice Selection Function (NSSF).

The core network 112 may further include a subscriber repository 114 coupled to the network element 110. The subscriber repository 114, among other things, may include subscriber profiles of a plurality of subscribers corresponding to at least one network operator. Examples of the subscriber repository 114 may vary based on the type of the cellular network 100. For instance, when the cellular network 100 is LTE network, the subscriber repository 114 may be HSS. On the other hand, when the cellular network 100 is 5G, the subscriber repository 114 may be Unified Data Repository (UDR).

The cellular network 100 may further include a distributed ledger 116 coupled to the network element 110. Examples of the distributed ledger 116 include, but are not limited to, private distributed ledger, permissioned distributed ledger, or a combination thereof.

The UE 106 may comprise a UE processor 118. The UE processor 118 may fetch and execute the computer-readable instructions 120 stored in a memory (not depicted in FIG. 1), to facilitate automatic SIM provisioning, amongst other functions. Further, the network element 110 may comprise an NE processor 122. The NE processor 122 may fetch and execute the computer-readable instructions 124 stored in a memory (not depicted in FIG. 1), to facilitate automatic SIM provisioning, amongst other functions.

In operation, the UE processor 118 may generate an Auto-Provisioning (AP) configuration request for at least one secondary SIM corresponding to a primary SIM. In an example, the primary SIM and the at least one secondary SIM may be associated with the UE 106. In another example, the primary SIM may be associated with the UE 106 and the at least one secondary SIM may be associated with at least one device communicatively coupled to the UE 106. In yet another example, the primary SIM and the at least one secondary SIM may be associated with different devices communicatively coupled to the UE 106. In the example, the UE 106 may be utilized to facilitate the auto-provisioning of the at least one secondary SIM.

The UE processor 118 may then transmit the AP configuration request to the network element 110. The AP request may include a first pseudo-identifier associated with the primary SIM. In an example, the UE processor 118 may transmit the AP configuration request via the network node 104.

Upon receiving the AP configuration request, the NE processor 122 may authenticate the primary SIM by querying the subscriber repository 114 based on the first pseudo-identifier. The NE processor 122 may authenticate the primary SIM by querying the subscriber repository 114 based on the first pseudo-identifier.

Upon successful authentication, the NE processor 122 may derive a first secure hash corresponding to the first pseudo-identifier. The NE processor 122 may then transmit a request for at least one second pseudo-identifier associated with the at least one secondary SIM. In an example, the NE processor 122 may transmit the request for at least one second pseudo-identifier to the UE 106 via the network node 104. In response to the request, the UE processor 118 may transmit the at least one second pseudo-identifier to the network element 110.

Subsequently, the NE processor 122 may derive at least one second secure hash for the secondary SIM. In an example, the NE processor 122 may derive at least one second secure hash based on the second pseudo-identifier and the first secure hash, thereby establishing a cryptographic link between the primary and at least one secondary SIM.

The NE processor 122 may then store the first secure hash and the at least one second secure hash in the distributed ledger 116. In an example, the NE processor 122 may store the first secure hash in a first node and the at least one second secure hash in at least one second node. In the example, the first node and the at least one second node maybe linked within the distributed ledger 116. The NE processor 122 may then transmit an AP configuration response to the UE 106, indicating successful linkage of the primary SIM and the at least one secondary SIM.

By establishing the linkage between the primary SIM and the at least one secondary SIM and utilizing the established linkage to simultaneously provision the at least one secondary SIM with similar configuration settings, the present subject matter facilitates reduction in operational complexity involved in SIM provisioning for the at least one secondary SIM.

In an example, once the linkage between the primary SIM and the at least one secondary SIM is established, the UE processor 118 may transmit an AP request to the network element 110. In the example, the UE processor 118 may transmit the AP request via the network node 104. Upon reception of the AP request, the NE processor 122 may re-authenticate the primary SIM with a network operator associated with the primary SIM using the first pseudo-identifier. Once the primary SIM is authenticated, the NE processor 122 may query the distributed ledger 116 to identify the at least one secondary SIM linked to the primary SIM and initiate AP for the at least one secondary SIM. The manner in which the AP is performed is described in further details in conjunction with the forthcoming figures.

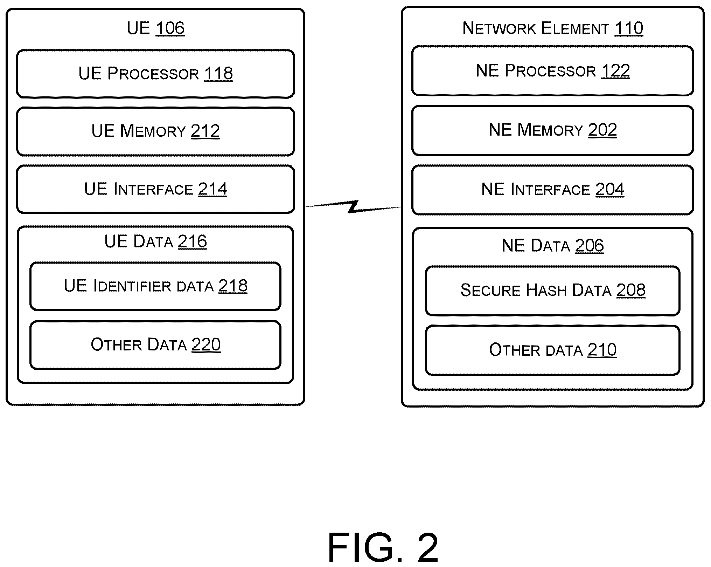

Fig. 2 illustrates schematics of the network element 110, in accordance with an example of the present subject matter. In an example, the network element 110 may be communicatively coupled to the UE 106 via the network node 104.

The network element 110 may comprise the NE processor 122, a NE memory 202, and a NE interface 204 coupled to the NE memory 202. The functions of various elements shown in the figs., including any functional blocks labelled as "network element processor", may be provided through the use of dedicated hardware as well as hardware capable of executing instructions. When provided by a processor, the functions may be provided by a single dedicated processor, by a single shared processor, or by a plurality of individual processors, some of which may be shared. Moreover, explicit use of the term "processor" would not be construed to refer exclusively to hardware capable of executing instructions, and may implicitly comprise, without limitation, digital signal processor (DSP) hardware, network processor, application specific integrated circuit (ASIC), field programmable gate array (FPGA). Other hardware, standard and/or custom, may also be coupled to the NE processor 122.

The NE memory 202 may be a computer-readable medium, examples of which comprise volatile memory (e.g., RAM), and/or non-volatile memory (e.g., Erasable Programmable read-only memory, i.e., EPROM, flash memory, etc.). The NE memory 202 may be an external memory, or internal memory, such as a flash drive, a compact disk drive, an external hard disk drive, or the like. The NE memory 202 may further comprise data which either may be utilized or generated during the operation of the network element 110.

The NE interface 204 may allow the connection or coupling of the network element with one or more other devices, through a wired (e.g., Local Area Network, i.e., LAN) connection or through a wireless connection (e.g., Bluetooth^{®}, WiFi). The NE interface 204 may also enable intercommunication between different logical as well as hardware components of the network element.

The network element 110 may further comprise NE data 206 that may be utilized or generated by the NE processor 122 while performing a variety of functions. In an example, the NE data 206 comprises secure hash data 208, and other data 210. The other data 210, amongst other things, may serve as a repository for storing data that is processed, or received, or generated as a result of the execution of the instructions by the NE processor 122. In an example, the NE data 206 may be stored in the NE memory 202.

Turning to the UE 106, the UE 106 may comprise the UE processor 118, a UE memory 212, and a UE interface 214 coupled to the UE memory 212. The functions of various elements shown in the figs., including any functional blocks labelled as "UE processor", may be provided through the use of dedicated hardware as well as hardware capable of executing instructions. When provided by a processor, the functions may be provided by a single dedicated processor, by a single shared processor, or by a plurality of individual processors, some of which may be shared. Moreover, explicit use of the term "processor" would not be construed to refer exclusively to hardware capable of executing instructions, and may implicitly comprise, without limitation, digital signal processor (DSP) hardware, network processor, application specific integrated circuit (ASIC), field programmable gate array (FPGA). Other hardware, standard and/or custom, may also be coupled to the UE processor.

The UE memory 212 may be a computer-readable medium, examples of which comprise volatile memory (e.g., RAM), and/or non-volatile memory (e.g., Erasable Programmable read-only memory, i.e., EPROM, flash memory, etc.). The UE memory 212 may be an external memory, or internal memory, such as a flash drive, a compact disk drive, an external hard disk drive, or the like. The UE memory 212 may further comprise data which either may be utilized or generated during the operation of the UE 106.

The UE interface 214 may allow the connection or coupling of the UE 106 with one or more other devices, through a wired (e.g., Local Area Network, i.e., LAN) connection or through a wireless connection (e.g., Bluetooth^{®}, WiFi). The UE 214 may also enable intercommunication between different logical as well as hardware components of the UE 106.

The UE 106 may further comprise UE data 216 that may be utilized or generated by the UE 106 while performing a variety of functions. In an example, the UE data 216 comprises UE identifier data 218 and other data 220. The UE identifier data 218 may include the first pseudo identifier and the at least one second pseudo identifier. Further, the other data 220, amongst other things, may serve as a repository for storing data that is processed, or received, or generated as a result of the execution of the instructions by the UE processor 118. In an example, the UE data 216 may be stored in the UE memory 212.

In operation, the UE processor 118 may generate an AP configuration request for the at least one secondary SIM corresponding to the primary SIM. The UE processor 118 may generate the AP configuration request in various situations. In an example, the UE processor 118 may generate the AP configuration request when a user adds a new secondary SIM to the UE 106. In such a situation, the UE processor 118 may generate the AP configuration request to establish the linkage between the primary and the newly added secondary SIM. In another example, the UE processor 118 may generate the AP configuration request when new devices with embedded or integrated SIMs are added to an loT setup.

The AP configuration request may include the first pseudo-identifier. In an example, the first pseudo-identifier may be the pseudo-International Mobile Subscriber Identity (IMSI) code of the primary SIM. The UE processor 118 may then transmit the AP configuration request to the network element 110.

In an example, prior to transmitting the AP configuration request, the UE processor 118 may authenticate the primary SIM with an Authentication Proxy (AuP) Server of a network operator corresponding to the primary SIM. In the example, the UE processor 118 may authenticate the primary SIM with the AuP Server based on the first pseudo-identifier.

Upon receiving the AP configuration request, the NE processor 122 may authenticate the primary SIM. In an example, to authenticate the primary SIM, the NE processor 122 may query the subscriber repository 114 to identify a subscriber profile corresponding to the primary SIM. If a subscriber profile corresponding to the primary SIM is identified in the subscriber repository 114, the primary SIM may be authenticated. Upon authentication of the primary SIM, the NE processor 122 may generate a first secure hash corresponding to the primary SIM. The NE processor 122 may then store the first secure hash in the secure hash data 208. In an example, the NE processor 122 may generate the first secure hash based on the first pseudo-identifier. In the example, the NE processor 122 may generate the first secure hash based on cryptographic algorithms, such as Secure Hash Algorithm (SHA)-256 and SHA-3.

The NE processor 122 may then transmit a request for the at least one second pseudo-identifier corresponding to the at least one secondary SIM to the UE 106. In an example, the at least one second pseudo-identifier may be the pseudo-IMSI code of the at least one secondary SIM. In response to the request, the UE processor 118 may transmit at least one second pseudo-identifier to the network element 110.

Upon receiving the at least one second pseudo-identifier, the NE processor 122 may generate at least one second secure hash. In an example, the NE processor 122 may generate the second secure hash based on the first secure hash and the at least one second pseudo-identifier, thereby establishing a cryptographic link between the primary and the at least one secondary SIM. In the example, the NE processor 122 may generate the at least one second secure hash based on the cryptographic algorithms, such as SHA-256 and SHA-3. The NE processor 122 may then store the at least one second secure hash in the secure hash data 208.

The NE processor 122 may then store the first secure hash and the at least one second secure hash in the distributed ledger 116. In an example, the NE processor 122 may store the first secure hash in a first node and the at least one second secure hash in at least one second node. In the example, the first node and the at least one second node may be linked within the distributed ledger 116. The NE processor 122 may then transmit an AP configuration response to the UE 106, indicating successful linkage of the primary SIM and the at least one secondary SIM. In an example, the AP configuration response may include additional metadata, such as timestamps and unique transaction identifiers, corresponding to the storage of the first secure hash and the at least one second secure hash on the first node and the at least one second node, respectively.

In an example, once the primary SIM is linked to the at least one secondary SIM, the NE processor 122 may transmit a request to enlist the network element 110 as a Network Function (NF) producer instance capable of performing auto-provisioning of linked SIMs to an NRF (not shown) included in the core network 112. Accordingly, whenever the NRF receives a discovery request from a NF consumer, the discovery request being for identification of NF producer instances capable of performing auto-provisioning, the NRF may reply with an indication of the network element 110. Accordingly, the AP request to initiate auto-provisioning of the at least one secondary SIM may be transmitted to the network element 110.

Once the linkage between the primary SIM and the secondary SIM has been established, the UE processor 118 may transmit the AP request to initiate provisioning of configuration settings on the at least one secondary SIM, where the AP request includes the first pseudo-identifier. Although it has been described that the AP request is transmitted from the UE 106, the AP request can also be transmitted from a different source, such as a Customer Relationship Management (CRM) system of the network operator associated with the primary SIM.

In an example, prior to transmitting the AP request, the UE processor 118 may re-authenticate the primary SIM with the network operator associated with the primary SIM. Once the primary SIM is authenticated with the associated network operator, the UE processor 118 may perform authentication of the at least one secondary SIM based on smart contracts corresponding to the distributed ledger 116 instead of individual authentication of each of the at least one secondary SIM with the core network. The smart contracts may contain predefined conditions and logic for validating the authenticity and permissions of the at least one secondary SIM. As a result, in addition to reduction in operational complexity, the present subject matter also facilitates reduction in signaling overhead involved in SIM provisioning for the at least one secondary SIM.

Upon reception of the AP request, the NE processor 122 may determine if the subscriber repository 114 includes AP context data required for provisioning configuration settings on the at least one secondary SIM. In an example, the AP context data may be indicative of resources for provisioning configuration settings on the at least one secondary SIM and may be provisioned by the CRM system associated with the network operator of the primary SIM. The AP context data may include various parameters, such as Quality of Service (QoS) profiles, allowed services, network access preferences, and billing information. In the example, once the AP context data is provisioned on the subscriber repository 114, the CRM system may transmit a location of the AP context data to network element 110. Upon receiving the location of the AP context data, the NE processor 122 may store the AP context data in the other data 210.

Thereafter, the NE processor 122 may query the distributed ledger based on the first pseudo-identifier to identify the at least one secondary SIM linked to the primary SIM. The NE processor 122 may then retrieve the AP context data for the primary SIM based on the location of the AP context data on the subscriber repository 114. The NE processor 122 may then initiate auto-provisioning for the at least one secondary SIM based on the AP context data.

In an example, the NE processor 122 may implement a gradual rollout strategy for auto-provisioning at least one secondary SIMs. That is, instead of provisioning all secondary SIMs simultaneously, which could potentially overload network resources, the NE processor 122 may stagger the auto-provisioning over a defined time period.

In an example, the NE processor 122 may initiate auto-provisioning for the at least one secondary SIM to update configuration settings on the at least one secondary SIM. The configuration settings may be updated to enhance the QoS associated with the at least one secondary SIM. For instance, the configuration settings may involve updating the cellular network compatibility of at least one secondary SIM from LTE to 5G to provide faster upload and download speeds. In such a situation, the NE processor 122 may initiate auto-provisioning during off-peak hours, such as between 2:00 AM and 4:00 AM local time, when network traffic is typically lower. Alternatively, the NE processor 122 may specify waiting until the at least one secondary SIM has been inactive for a certain period, such as 30 minutes, before initiating the auto-provisioning.

Further, when the scheduling criteria are met, the NE processor 122 may check if the at least one secondary SIM is currently in an active communication session. If so, the NE processor 122 may further delay the auto-provisioning to avoid interrupting an ongoing operation. Once the at least one secondary SIM becomes idle, the NE processor 122 may proceed with retrieving the AP context data and initiating the auto-provisioning.

By incorporating scheduling and readiness checks, the NE processor 122 may ensure that the auto-provisioning process occurs at opportune times, thereby minimizing any potential disruption to the operation of the at least one secondary SIM.

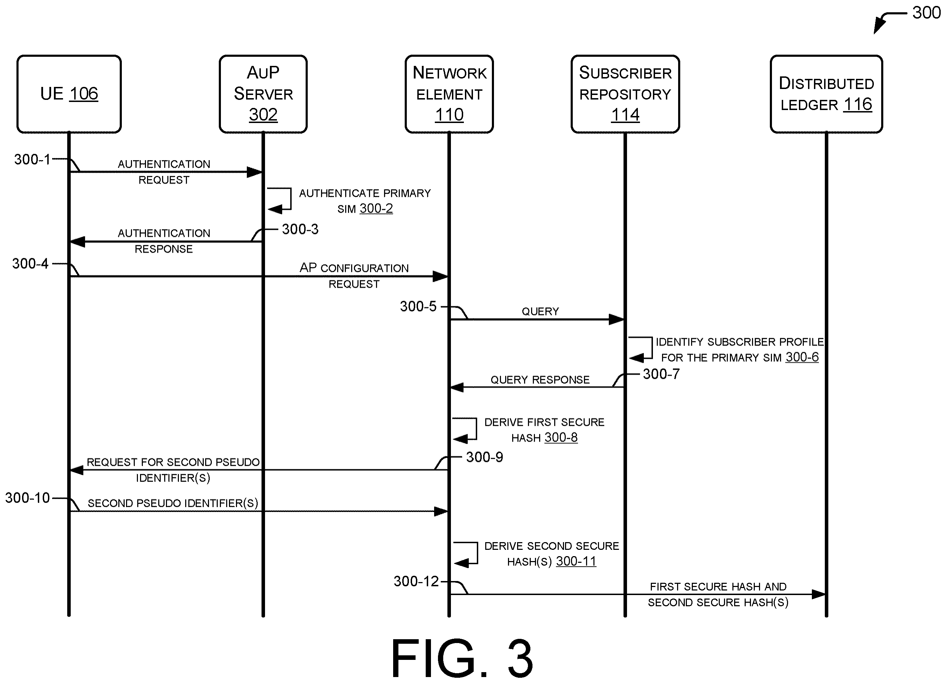

Fig. 3 illustrates a call flow 300 for facilitating automatic SIM provisioning, in accordance with an example of the present subject matter.

At step 300-1, the UE 106 may transmit an authentication request to the primary SIM to an AuP Server of the network operator associated with the primary SIM, such as the AuP Server 302. The authentication request may include the first pseudo identifier. At step 300-2, the AuP Server 302 may authenticate the primary SIM based on the first pseudo identifier. At step 300-3, the AuP Server 302 may transmit an AP configuration response to the UE 106, where the AP configuration response is indicative of successful authentication of the primary SIM.

Thereafter, at step 300-4, the UE 106 may transmit the AP configuration request to the network element 110. In an example, the AP configuration request may include the first pseudo identifier authenticated by the AuP Server 302.

At step 300-5, the network element 110 may query the subscriber repository 114 based on the first pseudo identifier to authenticate the primary SIM. At step 300-6, the subscriber repository 114 may identify a subscriber profile for the primary SIM based on the first pseudo identifier. At step 300-7, upon identification of the subscriber profile for the primary SIM, the subscriber repository 114 may transmit a query response to the network element 110, where the query response is indicative of the successful authentication of the primary SIM.

At step 300-8, upon successful authentication of the primary SIM, the network element 110 may generate a first secure hash for the primary SIM. In an example, the network element 110 may generate the first secure hash based on the first pseudo identifier. The network element 110 may generate the first secure hash based on cryptographic algorithms, such as SHA-256 and SHA-3.

Thereafter, at step 300-9, the network element 110 may send a request for the at least one second pseudo identifier to the UE 106. At step 300-10, the UE 106 may transmit the at least one second pseudo identifier to the network element 110. At step 300-11, the network element 110 may generate at least one second secure hash based on the at least one second pseudo identifier and the first secure hash, thereby establishing a cryptographic link between the primary and at least one secondary SIM. The network element 110 may generate the at least one second secure hash based on cryptographic algorithms, such as SHA-256 and SHA-3.

At step 300-12, the network element 110 may transmit the first secure hash on the first node of the distributed ledger 116 and second secure hash on the at least one second node of the distributed ledger 116. In an example, the first node may be linked to the at least one second node.

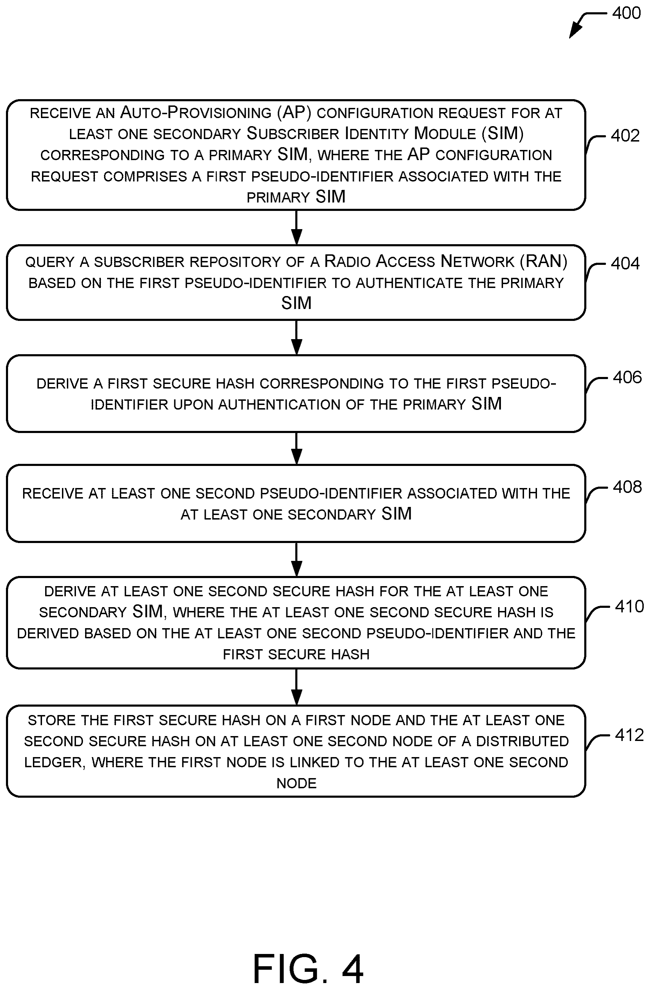

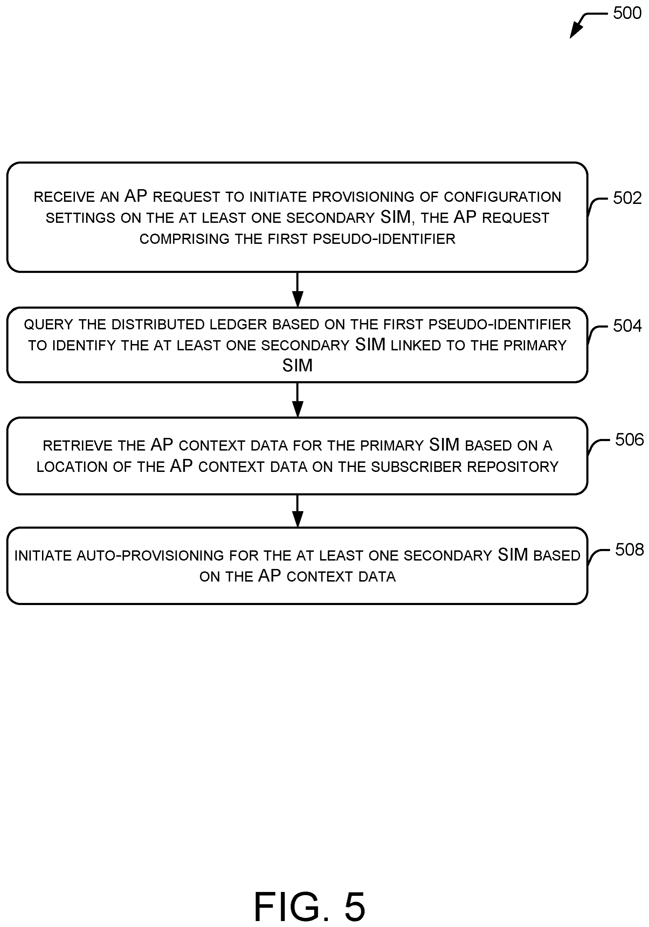

Figs. 4 and 5 illustrate methods for facilitating automatic SIM provisioning, in accordance with examples of the present subject matter. Although the methods 400 and 500 may be implemented in a variety of devices, but for the ease of explanation, the description of the methods 400 and 500 is provided in reference to the above-described network element 110. The order in which the methods 400 and 500 are described is not intended to be construed as a limitation, and any number of the described method blocks may be combined in any order to implement the methods 400 and 500, or an alternative method.

It may be understood that blocks of the methods 400 and 500 may be performed in the network element 110. The blocks of the methods 400 and 500 may be executed based on instructions stored in a non-transitory computer-readable medium, as will be readily understood. The non-transitory computer-readable medium may comprise, for example, digital memories, magnetic storage media, such as magnetic disks and magnetic tapes, hard drives, or optically readable digital data storage media.

At block 402, an AP configuration request for at least one secondary SIM corresponding to a primary SIM may be received. The AP configuration request may include a first pseudo-identifier associated with the primary SIM. Further, the first pseudo-identifier may be pseudo-IMSI code.

At block 404, a subscriber repository of a RAN may be queried based on the first pseudo-identifier to authenticate the primary SIM. In an example, the authentication of the primary SIM includes identifying a subscriber profile for the primary SIM based on the first pseudo-identifier, where the subscriber profile is identified from amongst a plurality of subscriber profiles stored in the subscriber repository.

At block 406, a first secure hash corresponding to the first pseudo-identifier may be derived. In an example, the first secure hash may be derived upon authentication of the primary SIM. Further, the first secure hash may be derived based on cryptographic algorithms, such as SHA-256 and SHA-3.

At block 408, at least one second pseudo-identifier associated with the at least one secondary SIM may be received. In an example, the at least one second pseudo-identifier may be pseudo-IMSI code.

At block 410, at least one second secure hash may be derived for the at least one secondary SIM. In an example, the at least one second secure hash may be derived based on the at least one second pseudo-identifier and the first secure hash, thereby establishing a cryptographic link between the primary SIM and the at least one secondary SIM. In an example, the at least one second secure hash may be derived based on cryptographic algorithms, such as SHA-256 and SHA-3.

At block 412, the first secure hash may be stored on a first node and the at least one second secure hash may be stored on at least one second node of a distributed ledger. In an example, the first node may be linked to the at least one second node.

In fig. 5, at block 502, an AP request to initiate provisioning of configuration settings on the at least one secondary SIM may be received. In an example, the AP request may include the first pseudo-identifier.

At block 504, the distributed ledger may be queried to identify the at least one secondary SIM linked to the primary SIM. The distributed ledger may be queried based on the first pseudo-identifier.

At block 506, AP context data for the primary SIM may be retrieved based on a location of the AP context data on the subscriber repository. The AP context data may be indicative of resources for provisioning configuration settings on the at least one secondary SIM and may be provisioned by the CRM system associated with the network operator of the primary SIM. The AP context data may include various parameters, such as QoS profiles, allowed services, network access preferences, and billing information. Once the AP context data is provisioned on the subscriber repository, the CRM system may transmit the location of the AP context data to the network element.

At block 508, auto-provisioning for the at least one secondary SIM may be initiated based on the AP context data.

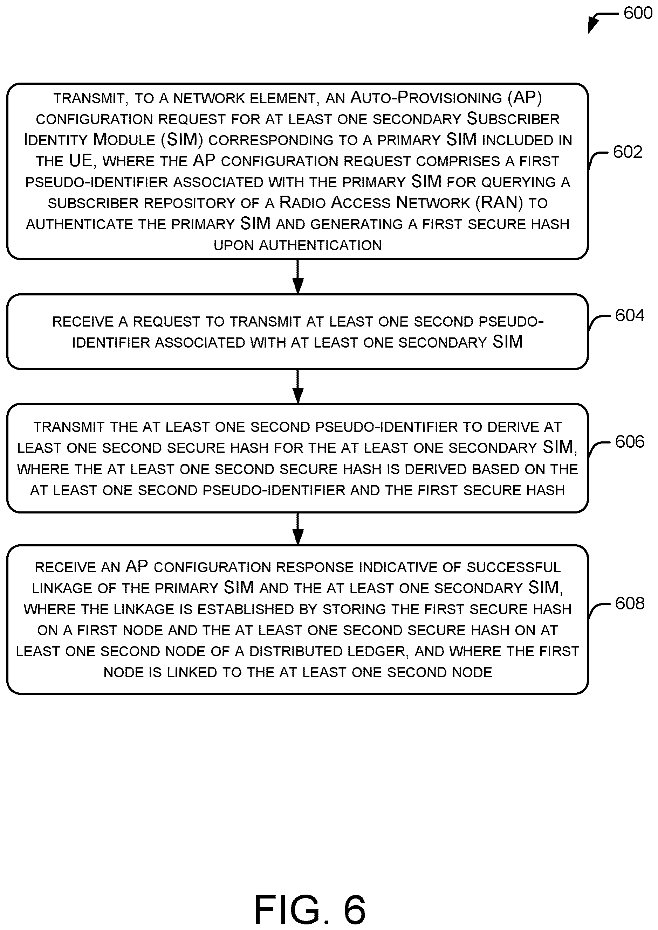

Fig. 6 illustrates a method for facilitating automatic SIM provisioning, in accordance with examples of the present subject matter. Although the method 600 may be implemented in a variety of devices, but for the ease of explanation, the description of the method 600 is provided in reference to the above-described UE 106. The order in which the method 600 is described is not intended to be construed as a limitation, and any number of the described method blocks may be combined in any order to implement the method 600, or an alternative method.

It may be understood that blocks of the method 600 may be performed in the UE 106. The blocks of the method 600 may be executed based on instructions stored in a non-transitory computer-readable medium, as will be readily understood. The non-transitory computer-readable medium may comprise, for example, digital memories, magnetic storage media, such as magnetic disks and magnetic tapes, hard drives, or optically readable digital data storage media.

At block 602, an AP configuration request for at least one secondary SIM corresponding to a primary SIM may be transmitted to a network element. In an example, the AP configuration request may include a first pseudo-identifier associated with the primary SIM. In the example, the first pseudo-identifier may be usable for querying a subscriber repository of a RAN to authenticate the primary SIM and generating a first secure hash upon authentication. The first pseudo-identifier may be pseudo-IMSI code.

In an example, prior to transmitting the AP configuration request, the primary SIM may be authenticated with an AuP Server of a network operator corresponding to the primary SIM. In the example, the primary SIM may be authenticated with the AuP Server based on the first pseudo-identifier.

At block 604, a request to transmit at least one second pseudo-identifier associated with at least one secondary SIM may be received.

At block 606, the at least one second pseudo-identifier may be transmitted to the network element. In an example, the at least one second pseudo-identifier may be usable to derive at least one second secure hash for the at least one secondary SIM. In the example, the at least one second secure hash may be derived based on the at least one second pseudo-identifier and the first secure hash. The at least one second pseudo-identifier may be pseudo-IMSI code.

At block 608, an AP configuration response may be received from the network element. In an example, the AP configuration response may be indicative of successful linkage of the primary SIM and the at least one secondary SIM. In the example, the linkage may be established by storing the first secure hash on a first node and the at least one second secure hash on at least one second node of a distributed ledger, where the first node is linked to the at least one second node.

In an example, once the at least one secondary SIM is linked to the primary SIM, an AP request to initiate provisioning of configuration settings on the at least one secondary SIM may be transmitted to the network element. The AP request may include the first pseudo-identifier. In the example, upon receiving the AP request, provisioning of the configuration settings on the at least one secondary SIM may be initiated. The manner in which the configuration settings are provisioned for the at least one secondary SIM is described in conjunction with fig. 5 and is not reproduced herein for the sake of brevity. Once the configuration settings are provisioned for the at least one secondary SIM, an AP response indicative of successful provisioning of the configuration settings on the at least one secondary SIM may be received.

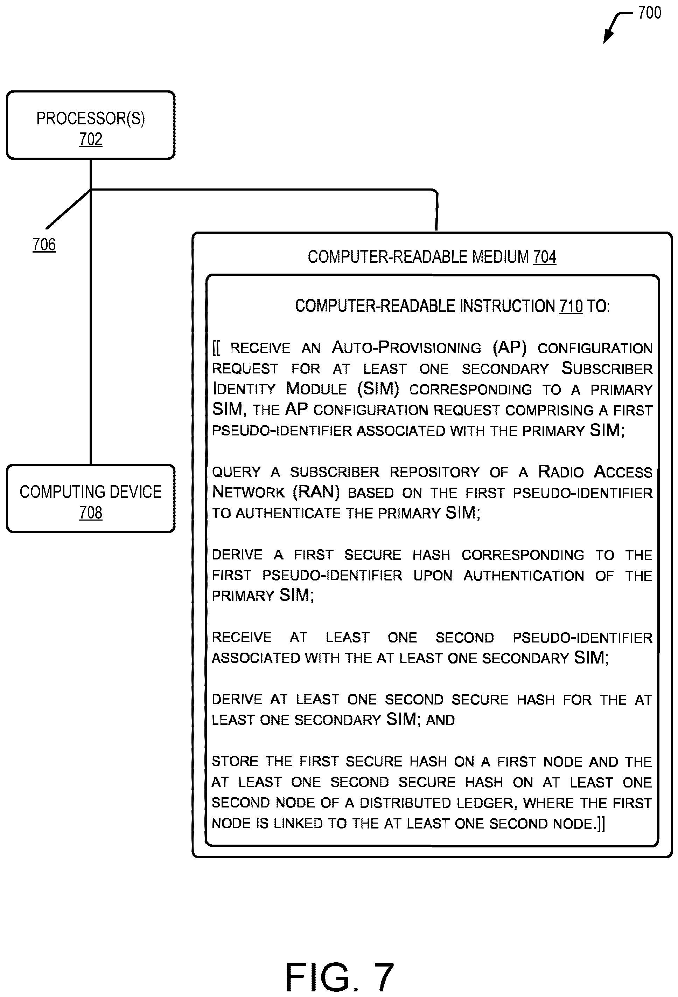

Fig. 7 illustrates a non-transitory computer-readable medium for facilitating automatic SIM provisioning, in accordance with an example of the present subject matter.

In an example, the computing environment 700 comprises processor 702 communicatively coupled to a non-transitory computer readable medium 704 through communication link 706. In an example, the computing environment 700 may be for example, the network element 110. In an example, the processor 702 may have one or more processing resources for fetching and executing computer-readable instructions from the non-transitory computer readable medium 704. The processor 702 and the non-transitory computer readable medium 704 may be implemented, for example, in the network element 110.

The non-transitory computer readable medium 704 may be, for example, an internal memory device or an external memory. In an example, the communication link 706 may be a network communication link, or other communication links, such as a PCI (Peripheral component interconnect) Express, USB-C (Universal Serial Bus Type-C) interfaces, I2C (Inter-Integrated Circuit) interfaces, etc. In an example, the non-transitory computer readable medium 704 comprises a set of computer readable instructions 710 which may be accessed by the processor 702 through the communication link 706 and subsequently executed for facilitating automatic SIM provisioning. The processor(s) 702 and the non-transitory computer readable medium 704 may also be communicatively coupled to a computing device 708 over the network.

Referring to Fig. 7, in an example, the non-transitory computer readable medium 704 comprises computer readable instructions 710 that cause the processor 702 to receive an AP configuration request for at least one secondary SIM corresponding to a primary SIM. The AP configuration request may include a first pseudo-identifier associated with the primary SIM. Further, the first pseudo-identifier may be pseudo-IMSI code.

The instructions 710 may then cause the processor 702 to a query a subscriber repository of a RAN based on the first pseudo-identifier to authenticate the primary SIM. In an example, to authenticate the primary SIM, the instructions 710 may cause the processor 702 to identify a subscriber profile for the primary SIM based on the first pseudo-identifier, where the subscriber profile is identified from amongst a plurality of subscriber profiles stored in the subscriber repository.

The instructions 710 may then cause the processor 702 to derive a first secure hash corresponding to the first pseudo-identifier. In an example, the instructions 710 may cause the processor 702 to derive the first secure hash upon authentication of the primary SIM.

The instructions 710 may then cause the processor 702 to receive at least one second pseudo-identifier associated with the at least one secondary SIM. In an example, the at least one second pseudo-identifier may be pseudo-IMSI code.

Thereafter, the instructions 710 may cause the processor 702 to derive at least one second secure hash for the at least one secondary SIM. In an example, the instructions 710 may cause the processor 702 to derive the at least one second secure hash based on the at least one second pseudo-identifier and the first secure hash, thereby establishing a cryptographic link between the primary SIM and the at least one secondary SIM. Subsequently, the instructions 710 may cause the processor 702 to store the first secure hash on a first node and the at least one second secure hash on at least one second node of a distributed ledger. In an example, the first node may be linked to the at least one second node.

Once the at least one secondary SIM is linked to the primary SIM, the instructions 710 may cause the processor 702 to receive an AP request to initiate provisioning of configuration settings on the at least one secondary SIM may be received. In an example, the AP request may include the first pseudo-identifier. The instructions 710 may then cause the processor 702 to query the distributed ledger to identify the at least one secondary SIM linked to the primary SIM. The instructions 710 may cause the processor 702 to query the distributed ledger based on the first pseudo-identifier.

Thereafter, the instructions 710 may cause the processor 702 to retrieve the AP context data for the primary SIM based on a location of the AP context data on the subscriber repository. The AP context data may be indicative of resources for provisioning configuration settings on the at least one secondary SIM and may be provisioned by the CRM system associated with the network operator of the primary SIM. The AP context data may include various parameters, such as QoS profiles, allowed services, network access preferences, and billing information. Subsequently, the instructions 710 may cause the processor 702 to initiate auto-provisioning for the at least one secondary SIM based on the AP context data.

Although examples of the present subject matter have been described in language specific to methods and/or structural features, it is to be understood that the present subject matter is not limited to the specific methods or features described. Rather, the methods and specific features are disclosed and explained as examples of the present subject matter.

## Claims

1. A method comprising:
receiving (402) an Auto-Provisioning (AP) configuration request for at least one secondary Subscriber Identity Module (SIM) corresponding to a primary SIM, the AP configuration request comprising a first pseudo-identifier associated with the primary SIM;
querying (404) a subscriber repository of a Radio Access Network (RAN) based on the first pseudo-identifier to authenticate the primary SIM;
deriving (406) a first secure hash corresponding to the first pseudo-identifier upon authentication of the primary SIM;
receiving (408) at least one second pseudo-identifier associated with the at least one secondary SIM;
deriving (410) at least one second secure hash for the at least one secondary SIM, the at least one second secure hash being derived based on the at least one second pseudo-identifier and the first secure hash; and
storing (412) the first secure hash on a first node and the at least one second secure hash on at least one second node of a distributed ledger, wherein the first node is linked to the at least one second node.

2. The method as claimed in claim 1, wherein the method further comprises receiving a location of AP context data for the primary SIM on the subscriber repository, the AP context data being indicative of resources for provisioning configuration settings on the at least one secondary SIM.

3. The method as claimed in claim 2, wherein the method further comprises:
receiving an AP request to initiate provisioning of configuration settings on the at least one secondary SIM, the AP request comprising the first pseudo-identifier;
querying the distributed ledger based on the first pseudo-identifier to identify the at least one secondary SIM linked to the primary SIM;
retrieving the AP context data for the primary SIM based on the location of the AP context data on the subscriber repository; and
initiating auto-provisioning for the at least one secondary SIM based on the AP context data.

4. The method as claimed in claim 3, wherein prior to querying the distributed ledger based on the first pseudo-identifier, the method comprises authenticating the primary SIM with a network operator corresponding to the primary SIM, the authenticating being based on the first pseudo-identifier.

5. The method as claimed in one of the claims 1 to 4, wherein the first pseudo-identifier and the at least one second pseudo-identifier is pseudo-International Mobile Subscriber Identity (IMSI) code.

6. The method as claimed in one of the claims 1 to 5, wherein the authenticating comprises identifying a subscriber profile for the primary SIM based on the first pseudo-identifier, the subscriber profile being identified from amongst a plurality of subscriber profiles stored in the subscriber repository.

7. A network element comprising:
at least one processor (122) and at least one memory (202) storing instructions that, when executed by the at least one processor, cause the network element at least to:
receive an Auto-Provisioning (AP) configuration request for at least one secondary Subscriber Identity Module (SIM) corresponding to a primary SIM, the AP configuration request comprising a first pseudo-identifier associated with the primary SIM;
query a subscriber repository of a Radio Access Network (RAN) based on the first pseudo-identifier to authenticate the primary SIM;
derive a first secure hash corresponding to the first pseudo-identifier upon authentication of the primary SIM;
receive at least one second pseudo-identifier associated with the at least one secondary SIM;
derive at least one second secure hash for the at least one secondary SIM, the at least one second secure hash being derived based on the at least one second pseudo-identifier and the first secure hash; and
store the first secure hash on a first node and the at least one second secure hash on at least one second node of a distributed ledger, wherein the first node is linked to the at least one second node.

8. The network element as claimed in claim 7, wherein the at least one processor further causes the network element to receive a location of AP context data for the primary SIM on the subscriber repository, the AP context data being indicative of resources for provisioning configuration settings on the at least one secondary SIM.

9. The network element as claimed in claim 8, wherein the at least one processor causes the network element to:
receive an AP request to initiate provisioning of configuration settings on the at least one secondary SIM, the AP request comprising the first pseudo-identifier;
query the distributed ledger based on the first pseudo-identifier to identify the at least one secondary SIM linked to the primary SIM;
retrieve the AP context data for the primary SIM based on the location of the AP context data on the subscriber repository; and
initiate AP for the at least one secondary SIM based on the AP context data.

10. The network element as claimed in claim 9, wherein prior to querying the distributed ledger based on the first pseudo-identifier, the at least one processor causes the network element to authenticate the primary SIM with a network operator corresponding to the primary SIM, the authenticating being based on the first pseudo-identifier.

11. The network element as claimed in one of the claims 7 to 10, wherein the first pseudo-identifier and the second pseudo-identifier is pseudo-International Mobile Subscriber Identity (IMSI) code.

12. A User Equipment (UE) comprising:
at least one processor (118) and at least one memory (212) storing instructions that, when executed by the at least one processor, cause the UE at least to:
transmit, to a network element, an Auto-Provisioning (AP) configuration request for at least one secondary Subscriber Identity Module (SIM) corresponding to a primary SIM, the AP configuration request comprising a first pseudo-identifier associated with the primary SIM for querying a subscriber repository of a Radio Access Network (RAN) to authenticate the primary SIM and generating a first secure hash upon authentication;
receive a request to transmit at least one second pseudo-identifier associated with at least one secondary SIM;
transmit the at least one second pseudo-identifier to derive at least one second secure hash for the at least one secondary SIM, the at least one second secure hash being derived based on the at least one second pseudo-identifier and the first secure hash; and
receive an AP configuration response indicative of successful linkage of the primary SIM and the at least one secondary SIM, the linkage being established by storing the first secure hash on a first node and the at least one second secure hash on at least one second node of a distributed ledger, wherein the first node is linked to the at least one second node.

13. The UE as claimed in claim 12, wherein prior to transmitting the AP configuration request, the at least one processor causes the UE to authenticate the primary SIM with an Authentication Proxy (AuP) Server of a network operator corresponding to the primary SIM based on the first pseudo-identifier.

14. The UE as claimed in one of the claims 12 or 13, wherein the at least one processor causes the UE to:
transmit an AP request to initiate provisioning of configuration settings on the at least one secondary SIM, the AP request comprising the first pseudo-identifier; and
receive an AP response indicative of successful provisioning of the configuration settings on the at least one secondary SIM.

15. The UE as claimed in one of the claims 12 to 14, wherein the first pseudo-identifier and the at least one second pseudo-identifier is pseudo-International Mobile Subscriber Identity (IMSI) code.
